# EUROPEAN PATENT APPLICATION

(11) **EP 1 069 534 A2**
(43) Date of publication of application: **17.01.2001**
(21) Application number: 00305677.7
(22) Date of filing: 05.07.2000
(51) Int. Cl.: G06T 15/10

(54) **Method and apparatus for the visualization and updating of three-dimensional scenes**

(30) Priority: 12.07.1999 US 351989
(71) Applicant: STYLECLICK.COM, Culver City, CA 90230 (US)
(72) Inventor: Vecchione, Mauritio, Culver City, CA 90230 (US); Mika, Joseph, Culver City, CA 90230 (US); Pitts, Jeffrey, Reseda, California 91335 (US); Gentry, Steven, Culver City, CA 90230 (US)
(74) Representative: Wombwell, Francis

(57) **Abstract**

A method for maintaining a virtual environment for visualization in a computer graphic system. A variety of views of the environment are rendered, which are then accessed based on the viewer s position within the environment and view direction. If objects within the environment are changed, only those rendered images in which the objects are visible are updated.

## Description

### BACKGROUND OF THE INVENTION

### FIELD OF THE INVENTION

The present invention relates generally to the field of computer graphics. More specifically, the invention relates to a method for maintaining a virtual environment.

### SUMMARY OF THE INVENTION

The present invention provides a method for maintaining a virtual environment for visualization in a computer graphic system. A variety of views of the environment are rendered, which are then accessed based on the viewer s position within the environment and view direction. If objects within the environment are changed, only those rendered images in which the objects are visible are updated.

### BRIEF DESCRIPTION OF THE DRAWINGS

**Figure 1** is a plan view of a virtual environment in the nature of a shopping mall.
**Figure 2** is a functional flow diagram of the method steps of the present invention.
**Figure 3** illustrates an image list utilized by the present invention.

### DETAILED DESCRIPTION OF THE INVENTION

In the following description, for purposes of explanation and not limitation, specific details are set forth in order to provide a thorough understanding of the present invention. However, it will be apparent to one skilled in the art that the present invention may be practiced in other embodiments that depart from these specific details. In other instances, detailed descriptions of well-known methods and devices are omitted so as to not obscure the description of the present invention with unnecessary detail.

The present invention provides a process for creating a navigable virtual reality scene which can be updated and whose component objects can be updated dynamically. The ability to update objects within a scene makes the method of the present invention particularly useful for electronic commerce applications, such as the creation of a virtual store or virtual shopping mall. The method steps of the present invention can be summarized as follows:
1. A 3D model of a scene is created using traditional modeling techniques.
2. A series of nodes is defined representing viewpoints into the 3D scene.
3. Each node s position is entered into a database.
4. One or more vectors are identified at each node representing one or more views into the scene from that node. These vectors are added to the database associated with each node.
5. A 3D rendering process is used to create a set of one or more pictures representing the fully rendered scene at each node according to each viewpoint vector.
6. A list is created in the database creating an index correlating each node and viewpoint vector with the appropriate rendered picture.
7. All items (objects) contained in the particular picture are listed and entered into the database.
8. A display mechanism allows the user to select each one of the nodes and at each node select one of the available viewpoints.
9. By looking at the database index the appropriate image is displayed.
10. If an item contained in the 3D model needs to be changed (replaced or updated) the database is queried to produce the list of pictures that contain that item.
11. The database is updated to point to the new pictures for the affected viewpoints, as well as all indexes are updated.
12. The database is updated to point to the new pictures for the affected viewpoints, as well as all indices are updated.
13. The display mechanism is used again as in step 8 and 9 to display the now updated scene.

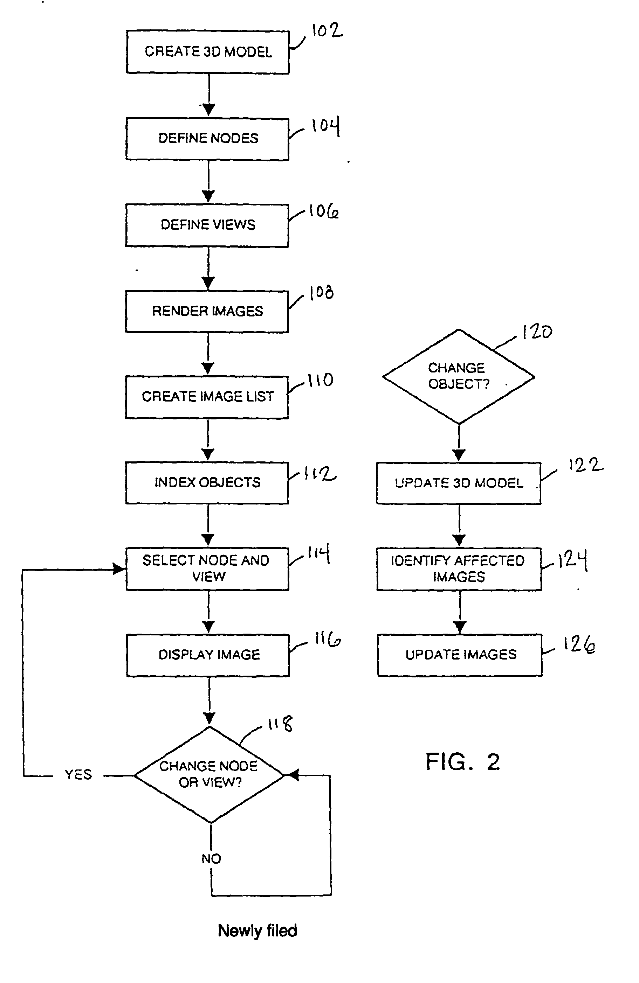

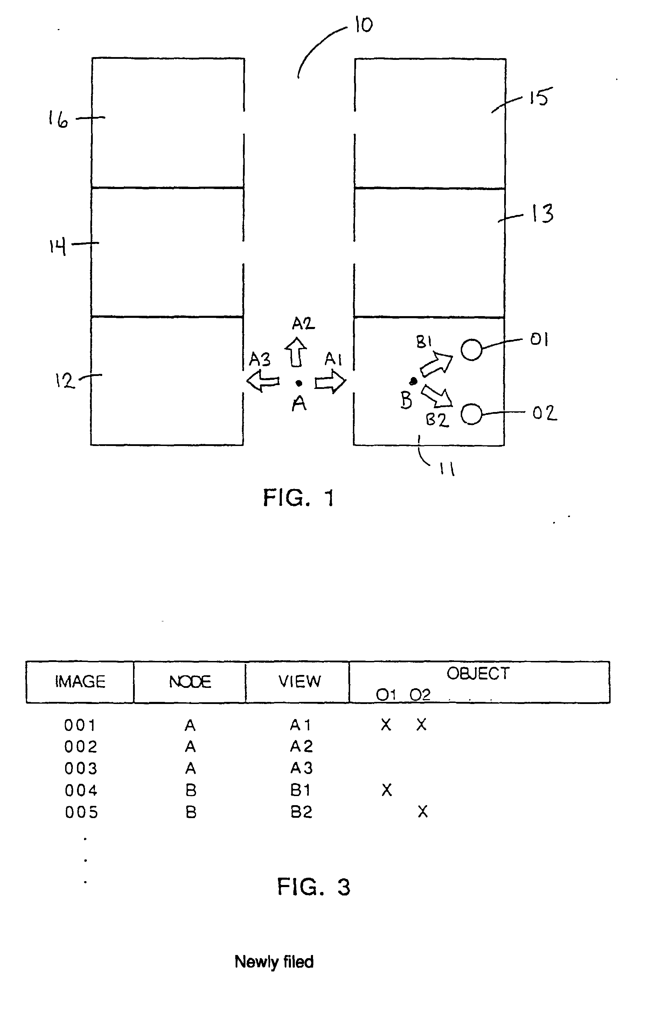

**Figure 1** illustrates an exemplary embodiment of the present invention, which provides a virtual shopping mall. A floor plan view of the virtual shopping mall is shown in **Figure 1** where corridor **10** is bordered by stores **11 ― 16**. Preferably, the shopper can move at will through the virtual shopping mall, including each of the virtual stores. A set of nodes are defined, which may be envisioned as specific locations where the shopper can stand and look about. Two such nodes are identified in **Figure 1** as **A** and **B**.

At each node, the shopper has a choice of several view directions. For example, at node **A**, the shopper may look in view direction **A1** to look into store **11**, view direction **A2** to look down corridor **10** or view direction **A3** to look into store **12**. From node **A**, the shopper can move to any other predefined node, such as node **B**. Here, the shopper again may select a view direction. At node **B**, the shopper can look in direction **B1** towards object **O1**, or in direction **B2** towards object **O2**.

A variety of objects may be located within the virtual environment. In the exemplary case of the virtual shopping mall, objects may include, for example, mannequins dressed with items of clothing, other clothing displays and the like.

As mentioned above, **Figure 1** is merely a floor plan of a virtual shopping mall. However, the shopping mall or other virtual environment is defined by a three-dimensional mathematical model. Likewise, all of the objects within the environment are defined in three dimensions. Since the entire environment is defined in three dimensions, images in each of the view directions at each of the nodes can be rendered using well-known imaging techniques. These images are preferably generated off-line and stored in a library for retrieval as the shopper navigates through the environment.

Referring now to **Figure 2**, the principal method steps of the subject invention are illustrated in flow diagram form. Beginning with step **102**, a three-dimensional mathematical model of the virtual environment is created. At step **104**, the nodes within the environment are defined, and at step **106**, the view directions at each of the nodes are defined. Now, the view images can be rendered at step **108** using conventional image processing techniques.

A list of each rendered image is maintained, together with the corresponding node and view direction. The list also identifies each object that appears within the rendered image so that, if an object is changed, the images affected thereby can be updated without also updating unaffected images. An example of the image list is illustrated in **Figure 3**. Referring also to **Figure 1**, it can be seen that both of objects **O1** and **O2** appear in the image rendered for view direction **A1** at node **A**. Neither of these objects appears in the images rendered for view directions **A2** or **A3**. Object **O1** appears in the image rendered for view direction **B1** at node **B**, whereas object **O2** appears in the image rendered for view direction **B2** at node **B**. In this example, it can be seen that, if object **O1** is changed, only images **001** and **004** need be updated. Likewise, if object **O2** is changed, only images **001** and **005** need be updated.

Returning to **Figure 2**, the interactive portion of the virtual shopping experience begins at step **114** where the shopper advances to a desired node and selects a desired viewpoint. The appropriate image is identified from the image list and is presented to the shopper at step **116**. The program then idles at step **118** awaiting a change in the node and/or view direction.

On occasion, it is desirable to change certain of the objects within the virtual environment. For example, mannequins within particular stores may be dressed with new items of apparel. Thus, the virtual shopping experience will afford new purchasing opportunities as merchandise is updated, just as in the real world. To implement such changes with a minimum of computational overhead, only the images that are affected by object changes are updated. The process for changing objects begins at step **120**. The three-dimensional model of the virtual environment is updated at step **122**. At step **124**, the images affected by the object change are identified from the image list and new images are then rendered from the three-dimensional data at step **126**.

It will be recognized that the above-described invention may be embodied in other specific forms without departing from the spirit or essential characteristics of the disclosure. Thus, it is understood that the invention is not to be limited by the foregoing illustrative details, but rather is to be defined by the appended claims.

## Claims

1. A method of maintaining a virtual environment comprising the steps of:
creating a three-dimensional model of the environment;
defining a plurality of nodes representing corresponding viewpoints in the environment;
defining at least one vector at each of the plurality of nodes representing a view direction;
rendering a picture of the environment for each vector of each node;
creating an index correlating each rendered picture with its corresponding vector and node; and
creating a database of all objects in each of the rendered pictures.

2. The method of step 1 further comprising the step of changing an object in the environment by:
querying the database to identify all rendered pictures in which the object appears;
rendering new pictures corresponding to those identified with the database query with the changed object;
updating the index to correlate each new picture with its corresponding vector and node.
